# DEMANDE DE BREVET EUROPEEN

(11) **EP 3 680 218 A1**
(43) Date de publication de la demande: **15.07.2020**
(21) Numéro de dépôt: 19172670.2
(22) Date de dépôt: 03.05.2019
(51) Int. Cl.: C02F 1/00, C02F 3/12, C02F 3/28, C02F 3/08, C02F 103/00

(54) **PROCÉDÉ ET SYSTÈME D'ÉPURATION POUR LE TRAITEMENT BIOLOGIQUE D'EAUX USÉES DOMESTIQUES**

(30) Priorité: 10.01.2019 EP 19151293
(71) Demandeur: Enviroass Sàrl, Témara (MA)
(72) Inventeur: TAZI, Larbi, Témara (MA); LAMRAOUI, Laaziza, Témara (MA)
(74) Mandataire: Noll, Ronald

(57) **Abrégé**

Il est décrit un procédé et un système d'épuration pour le traitement biologique d'eaux usées domestiques. Selon l'invention, une cuve de traitement (100) des eaux usées est prévue, laquelle cuve de traitement (100) est subdivisées en plusieurs sections de cuve successives (101-103). Une première section de cuve (101) de la cuve de traitement (100) est alimentée en eaux usées, non-traitées, comprenant des boues lourdes, matières solides résiduelles, et autres résidus organiques, première section de cuve (101) dans laquelle un traitement primaire des eaux usées est opéré. Une deuxième section de cuve (102) de la cuve de traitement (100) est alimentée au moyen des eaux usées, issues du traitement primaire, provenant de la première section de cuve (101), deuxième section de cuve (102) dans laquelle un traitement biologique des eaux usées est opéré et dans laquelle des médias filtrants (200) sont introduits, lesquels médias filtrants (200) agissent comme supports pour le traitement biologique des eaux usées dans la deuxième section de cuve (102). Les eaux usées, traitées biologiquement, sont prélevées dans la deuxième section de cuve (102) et acheminées vers une troisième section de cuve (103) de la cuve de traitement (100), troisième section de cuve (103) dans laquelle une clarification des eaux usées est opérée. L'alimentation de la deuxième section de cuve (102) est opérée par induction d'un mouvement ascensionnel des eaux usées dans une portion terminale de la première section de cuve (101).

## Description

### DOMAINE TECHNIQUE

La présente invention se rapporte de manière générale à un procédé et un système d'épuration pour le traitement biologique d'eaux usées domestiques. L'expression « microstation » sera également utilisée pour désigner le système d'épuration selon l'invention.

### ARRIÈRE-PLAN TECHNOLOGIQUE

De tels procédés et systèmes d'épuration sont connus en tant que tels de l'état de la technique.

Les solutions connues impliquent typiquement un traitement en trois phases débutant par (i) une décantation primaire des eaux usées dans une ou plusieurs cuves ou sections de cuve, suivi par (ii) un traitement biologique des eaux usées, décantées, dans une deuxième cuve ou section de cuve faisant office de réacteur biologique, puis (iii) une décantation secondaire des eaux usées, traitées biologiquement, dans une troisième cuve ou section de cuve, avant rejet des eaux traitées.

Le traitement biologique opéré selon ces solutions connues est communément un traitement biologique essentiellement aérobie, qui nécessite une oxygénation des eaux usées contenues dans le réacteur biologique, traitement biologique aérobie qui est communément assisté par l'introduction de médias filtrants dans le réacteur biologique agissant comme supports pour le traitement biologique des eaux usées.

Un problème des solutions connues susmentionnées réside dans la décantation primaire qui est opérée avant le traitement biologique, décantation qui nécessite que les eaux usées, non traitées, reposent afin de permettre une décantation des boues lourdes au fond de ou des cuves ou sections de cuve de décantation primaire, avant de transférer les parties plus liquides vers le réacteur biologique. Selon certaines solutions, deux cuves ou sections de cuve (voire plus) sont prévues pour opérer cette décantation primaire, ce qui occupe une part importante, pour un volume donné, de la capacité totale de traitement.

Par ailleurs, la décantation primaire conduit de facto à la production de gaz odorants, en particulier de sulfure d'hydrogène (H₂S).

Des solutions aux problématiques de traitement d'eaux usées domestiques sont donc toujours recherchées, en particulier des solutions adaptées à une utilisation dans des environnements faiblement urbanisés et qui ne nécessitent dans la mesure du possible pas ou peu de maintenance.

### EXPOSÉ DE L'INVENTION

Un but général de la présente invention est de proposer un procédé et un système d'épuration améliorés pour le traitement biologique d'eaux usées domestiques.

Plus particulièrement, un but de la présente invention est de proposer une telle solution qui soit robuste, efficace et ne nécessite que peu d'interventions et de maintenance.

Par ailleurs, un but de la présente invention est de proposer une solution peu coûteuse à l'usage et qui soit particulièrement adaptée à une utilisation dans des environnements faiblement urbanisés.

La présente invention répond à ces buts en proposant un procédé d'épuration dont les caractéristiques sont énumérées dans la revendication 1, à savoir un procédé d'épuration pour le traitement biologique d'eaux usées domestiques, comprenant les étapes suivantes :
- fourniture d'une cuve de traitement des eaux usées, laquelle cuve de traitement est subdivisées en plusieurs sections de cuve successives ;
- alimentation d'une première section de cuve de ladite cuve de traitement en eaux usées, non-traitées, comprenant des boues lourdes, matières solides résiduelles et autres résidus organiques, première section de cuve dans laquelle un traitement primaire des eaux usées est opéré ;
- alimentation d'une deuxième section de cuve de ladite cuve de traitement au moyen des eaux usées, issues du traitement primaire, provenant de la première section de cuve, deuxième section de cuve dans laquelle un traitement biologique des eaux usées est opéré et dans laquelle des médias filtrants sont introduits, lesquels médias filtrants agissent comme supports pour le traitement biologique des eaux usées dans ladite deuxième section de cuve ; et
- prélèvement des eaux usées, traitées biologiquement, dans ladite deuxième section de cuve et acheminement desdites eaux usées vers une troisième section de cuve de ladite cuve de traitement, troisième section de cuve dans laquelle une clarification des eaux usées, traitées biologiquement, est opérée.

Selon l'invention, l'alimentation de la deuxième section de cuve est opérée par induction d'un mouvement ascensionnel des eaux usées dans une portion terminale de la première section de cuve.

Selon une première variante de réalisation de l'invention (ou variante « anaérobie »), le traitement biologique opéré dans la deuxième section de cuve est un traitement biologique essentiellement anaérobie et le procédé d'épuration comporte en outre une étape d'introduction d'une souche bactérienne favorisant la digestion anaérobie des boues lourdes, matières solides résiduelles et autres résidus organiques contenus dans les eaux usées. Cette souche bactérienne est préférablement une souche bactérienne sélectionnée parmi les souches bactériennes utilisées pour le traitement anaérobie en réacteur UASB (Upflow Anaerobic Sludge Blanket).

Dans le contexte de cette première variante de réalisation, le mouvement ascensionnel des eaux usées peut en particulier être avantageusement induit par hydraulicité inversée dans une section de cuve formant couloir ascensionnel, en portion terminale de la première section de cuve.

Plus particulièrement, la deuxième section de cuve est préférablement alimentée au moyen d'un collecteur-distributeur prélevant les eaux usées, issues du traitement primaire, en partie haute de la section de cuve formant couloir ascensionnel et délivrant lesdites eaux usées en partie basse de ladite deuxième section de cuve.

Selon une seconde variante de réalisation de l'invention (ou variante « aérobie »), le traitement biologique opéré dans la deuxième section de cuve est un traitement biologique essentiellement aérobie et le procédé d'épuration comporte en outre une étape d'oxygénation des eaux usées contenues dans la deuxième section de cuve.

Dans le contexte de cette seconde variante de réalisation, le mouvement ascensionnel des eaux usées peut en particulier avantageusement être induit par adjonction de bulles d'air dans la première section de cuve. Dans les faits, cette oxygénation induit et favorise également le traitement primaire dans la première section de cuve, conduisant à un meilleur rendement final.

De préférence, les eaux usées séjournent pour une durée minimale de l'ordre de 36 à 72 heures dans ladite cuve de traitement. Dans le cas de la variante « anaérobie » susmentionnée, cette durée minimale peut en particulier être de l'ordre de 48 à 72 heures. Dans le cas de la variante « aérobie » susmentionnée, cette durée minimale peut être ramenée à une durée de l'ordre de 36 à 48 heures.

Selon un mode de réalisation de l'invention, applicable aux deux variantes de réalisation mentionnées ci-dessus, les eaux usées, traitées biologiquement, passent de la deuxième section de cuve à la troisième section de cuve par prélèvement au moyen d'un collecteur disposé en-dessous du plan d'eau de la deuxième section de cuve, lequel collecteur est pourvu d'orifices d'admission présentant un diamètre plus faible que les dimensions des médias filtrants.

Avantageusement, les eaux usées, traitées biologiquement et clarifiées, peuvent ensuite être rejetées par épandage. L'épandage dans le milieu récepteur est en particulier envisageable selon la disponibilité et la nature du terrain et la possibilité de réutiliser les eaux traitées à des fins d'arrosage d'espaces verts, par exemple.

La présente invention se rapporte également à un système d'épuration pour la mise en oeuvre du procédé d'épuration où le traitement biologique opéré dans la deuxième section de cuve est un traitement biologique essentiellement anaérobie, système d'épuration dont les caractéristiques sont énumérées dans la revendication 10, à savoir un tel système d'épuration comportant notamment une cuve de traitement subdivisées en plusieurs sections de cuve successives, comprenant :
- une première section de cuve configurée pour permettre l'alimentation en eaux usées non-traitées comprenant lesdites boues lourdes, matières solides résiduelles et autres résidus organiques ;
- une deuxième section de cuve configurée pour permettre l'alimentation en eaux usées provenant de la première section de cuve, laquelle deuxième section de cuve est adaptée pour contenir des médias filtrants ;
- un collecteur-distributeur prélevant les eaux usées provenant de la première section de cuve et délivrant lesdites eaux usées dans la deuxième section de cuve ;
- un collecteur configuré pour prélever les eaux traitées dans ladite deuxième section de cuve ; et
- une troisième section de cuve configurée pour permettre la clarification des eaux traitées prélevées par le collecteur,
la cuve de traitement comprenant en outre une section de cuve formant couloir ascensionnel, disposée en portion terminale de la première section de cuve, et dans laquelle le mouvement ascensionnel des eaux usées est induit.

Préférablement, le collecteur-distributeur est configuré pour prélever les eaux usées en partie haute de la section de cuve formant couloir ascensionnel et délivrer lesdites eaux usées en partie basse de ladite deuxième section de cuve.

La présente invention se rapporte également à un système d'épuration pour la mise en oeuvre du procédé d'épuration où le traitement biologique opéré dans la deuxième section de cuve est un traitement biologique essentiellement aérobie, système d'épuration dont les caractéristiques sont énumérées dans la revendication 11, à savoir un tel système d'épuration comportant notamment une cuve de traitement subdivisées en plusieurs sections de cuve successives, comprenant :
- une première section de cuve configurée pour permettre l'alimentation en eaux usées non-traitées comprenant lesdites boues lourdes, matières solides résiduelles et autres résidus organiques ;
- une deuxième section de cuve configurée pour permettre l'alimentation en eaux usées provenant de la première section de cuve, laquelle deuxième section de cuve est adaptée pour contenir des médias filtrants ;
- un collecteur-distributeur prélevant les eaux usées provenant de la première section de cuve et délivrant lesdites eaux usées dans la deuxième section de cuve ;
- un collecteur configuré pour prélever les eaux traitées dans ladite deuxième section de cuve ; et
- une troisième section de cuve configurée pour permettre la clarification des eaux traitées prélevées par le collecteur,
le système d'épuration comprenant en outre un système générateur de bulles d'air disposé dans la première section de cuve afin de démarrer le traitement primaire des eaux usées par digestion aérobie et induire le mouvement ascensionnel des eaux usées.

Préférablement, le système générateur de bulles d'air se prolonge dans la deuxième section de cuve afin d'opérer l'oxygénation des eaux usées contenues dans la deuxième section de cuve.

Selon un mode de réalisation particulièrement préféré, la cuve de traitement est de forme essentiellement cylindrique et compartimentée pour former lesdites sections de cuve successives, la cuve de traitement étant configurée pour être placée, notamment enterrée, en position horizontale de sorte que le traitement des eaux usées se déroule essentiellement horizontalement d'un bout à l'autre de la cuve de traitement.

La cuve de traitement peut en particulier être réalisée en polyester renforcé de fibres de verre (PRFV).

De préférence, la deuxième section de cuve occupe un volume représentant de l'ordre de 40 à 50% de la capacité totale de la cuve de traitement.

D'autres caractéristiques et avantages de la présente invention sont exposés dans la suite de la présente description.

### DESCRIPTION SOMMAIRE DES DESSINS

Les caractéristiques et avantages de la présente invention apparaîtront plus clairement à la lecture de la description détaillée qui suit de modes de réalisation de l'invention, lesquels sont présentés uniquement à titre d'exemples non limitatifs et sont illustrés par les dessins annexés où :
- la Figure 1A montre une vue en plan schématique d'un système d'épuration, ou microstation d'épuration, comportant une cuve de traitement compartimentée, selon une première variante de réalisation de l'invention ;
- la Figure 1B est une vue en coupe latérale schématique du système d'épuration de la Figure 1A ;
- les Figures 2A à 2E sont des vues en coupe transversales de la cuve de traitement représentée dans les Figures 1A et 1B, prises selon les plans de coupe A-A, B-B, C-C, D-D et E-E, tels que reportés sur les Figures 1A et 1B ;
- la Figure 3 est une illustration photographique d'un exemple de médias filtrants utilisés dans le cadre d'un mode de réalisation préféré de l'invention ;
- la Figure 4 est une illustration photographique d'un premier exemple de dégrilleur placé sur le trajet des eaux usées non-traitées, en amont de la cuve de traitement ;
- la Figure 5 est une illustration photographique d'un panier de grille en acier inoxydable utilisé comme composant d'un dégrilleur disposé en cuve ;
- la Figure 6A montre une vue en plan schématique d'un système d'épuration, ou microstation d'épuration, comportant une cuve de traitement compartimentée, selon une seconde variante de réalisation de l'invention ;
- la Figure 6B est une vue en coupe latérale schématique du système d'épuration de la Figure 6A ; et
- les Figures 7A à 7D sont des vues en coupe transversales de la cuve de traitement représentée dans les Figures 6A et 6B, prises selon les plans de coupe F-F, G-G, H-H et I-I, tels que reportés sur les Figures 6A et 6B.

### MODES DE RÉALISATION DE L'INVENTION

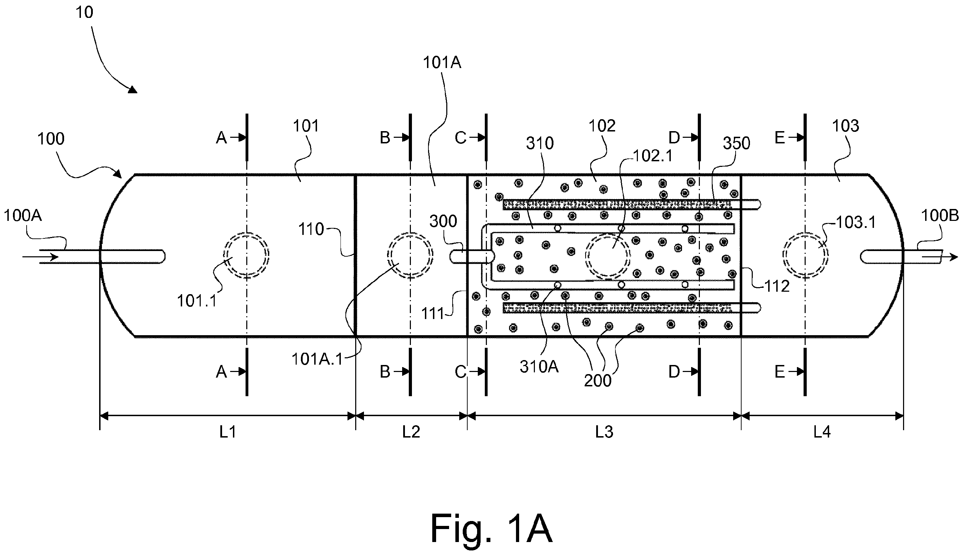

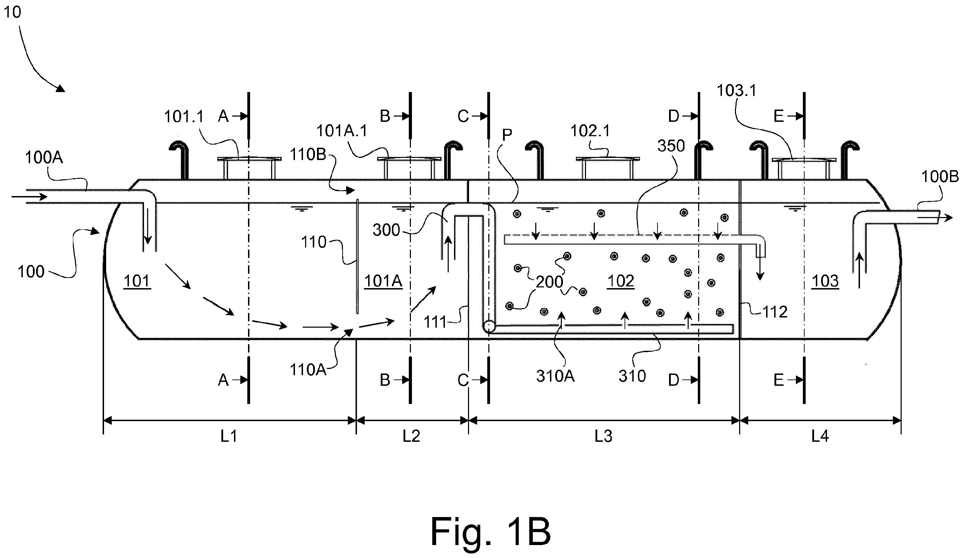

La présente invention sera décrite en référence à divers modes de réalisation préférés tels qu'illustrés notamment par les Figures 1 à 7A-D.

Les Figures 1A et 1B montrent respectivement une vue en plan et une vue en coupe latérale, schématiques, d'un système d'épuration, désigné globalement par la référence numérique 10, selon une première variante de réalisation de l'invention. Ce système d'épuration 10, ou microstation, comporte notamment une cuve de traitement compartimentée 100 pour le traitement des eaux usées domestiques. Il est question ici d'eaux usées provenant de diverses sources domestiques, en particulier d'eaux de rejets provenant d'installation sanitaires domestiques, eaux qui sont chargées de matières organiques et nécessitent une épuration avant rejet. Ces eaux usées comprennent en particulier des boues lourdes, matières solides résiduelles et autres résidus organiques qu'il convient de traiter.

La cuve de traitement 100 est subdivisée en plusieurs sections de cuve successives. Selon l'invention, on distingue en particulier trois sections de cuve principales 101 à 103, à savoir :
- une première section de cuve 101 (ou « fosse toutes eaux ») qui est alimentée en eaux usées, non-traitées, et dans laquelle un traitement primaire des eaux usées est opéré (cette première section de cuve 101 représente approximativement 30% de la capacité totale de la cuve de traitement 100) ;
- une deuxième section de cuve 102 (ou « réacteur biologique ») qui est alimentée en eaux usées, issues du traitement primaire, provenant de la première section de cuve 101, deuxième section de cuve 102 dans laquelle un traitement biologique des eaux usées est opéré avec l'assistance de médias filtrants 200 (cette deuxième section de cuve 102 représente un peu moins de 40% de la capacité totale de la cuve de traitement 100) ; et
- une troisième section de cuve 103 (ou « clarificateur ») qui est alimentée en eaux usées, traitées biologiquement, prélevées dans la deuxième section de cuve 102, et dans laquelle une clarification des eaux usées est opérée (cette troisième section de cuve 103 représente moins de 20% de la capacité totale de la cuve de traitement 100).

La cuve de traitement 100 est avantageusement de forme essentiellement cylindrique et compartimentée pour former lesdites sections de cuve successives 101-103, la cuve de traitement 100 étant placée en position horizontale de sorte que le traitement des eaux usées se déroule essentiellement horizontalement d'un bout à l'autre de la cuve de traitement 100. Dans l'exemple illustré, la cuve de traitement 100 présente un diamètre de l'ordre de 2.5 m. L'alimentation de la cuve de traitement 100, en l'occurrence de la première section de cuve 101, est assurée par un raccord d'entrée 100A qui est typiquement raccordé à un collecteur de rejets des eaux usées domestiques, non représenté. Les eaux usées, traitées biologiquement et clarifiées, sont extraites de la cuve de traitement 100, en l'occurrence de la troisième section de cuve 103, via un raccord de sortie 100B. Ce raccord de sortie 100B peut en particulier être raccordé à un système d'épandage, non représenté, ou à un système de traitement additionnel avant rejet. L'épandage dans le milieu récepteur est en particulier envisageable selon la disponibilité et la nature du terrain et la possibilité de réutiliser les eaux traitées à des fins d'arrosage d'espaces verts, par exemple. Les raccords d'entrée et de sortie 100A et 100B peuvent en particulier être des conduits en PVC d'un diamètre de 200 mm, dimensions qui sont indiquées à titre purement illustratif et ne sont nullement limitatives.

On comprendra donc que les eaux usées transitent dans la cuve de traitement 100 où un traitement biologique est opéré, de la gauche vers la droite dans les illustrations des Figures 1A et 1B, la cuve de traitement 100 étant alimentée en continu.

Selon un mode de réalisation préféré et particulièrement avantageux, la cuve de traitement est réalisée en polyester renforcé de fibres de verre (PRFV). La cuve de traitement est en particulier configurée pour être enterrée. En cela, la cuve de traitement 100 est préférablement conçue pour satisfaire les normes applicables, en particulier la norme SN EN 976 (« Réservoirs enterrés en plastiques renforcés de verre (PRV) »).

Le traitement primaire opéré dans la première section de cuve 101 consiste notamment en un commencement d'un processus de digestion anaérobie des boues lourdes, matières solides résiduelles et résidus organiques contenus dans les eaux usées. Ce traitement primaire vise également à assurer que les boues lourdes et matières solides résiduelles contenues dans les eaux usées ne transitent pas directement vers les sections de cuves subséquentes, mais essentiellement les portions liquides en vue d'un traitement biologique approfondi dans la deuxième section de cuve 102. Le processus de digestion anaérobie est induit par l'introduction dans les eaux usées d'une souche bactérienne, comme détaillé ci-après. Cette souche bactérienne intervient en digestion anaérobie des boues pour les réduire dans des proportions variant de l'ordre de 25% à 30% de leur volume.

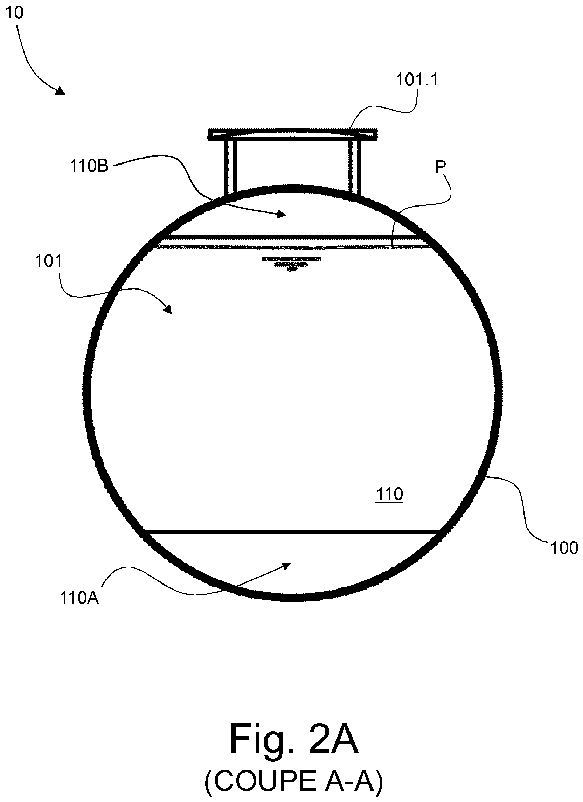

Selon l'invention, l'alimentation de la deuxième section de cuve 102 est opérée par induction d'un mouvement ascensionnel des eaux usées dans une portion terminale de la première section de cuve 101. Plus précisément, selon cette première variante de réalisation de l'invention, le mouvement ascensionnel des eaux usées est induit par hydraulicité inversée (comme schématisé dans la Figure 1B) dans une section de cuve 101A formant couloir ascensionnel, en portion terminale de la première section de cuve 101. Cette section de cuve 101A représente approximativement 15% de la capacité totale de la cuve de traitement 100. Plus exactement, une paroi de séparation 110 sépare la première section de cuve 101 de la section de cuve 101A, une ouverture inférieure 110A étant ménagée entre la paroi de séparation 110 et la paroi interne de la cuve de traitement 100 (voir Figures 1B et 2A). Une autre paroi de séparation 111 est quant à elle formée entre la première section de cuve 101 (ou plus exactement la section de cuve 101A) et la deuxième section de cuve 102, la section de cuve 101A formant couloir ascensionnel étant ainsi définie comme la section de cuve comprise entre les parois de séparation 110 et 111. Une paroi de séparation 112 est de même formée entre la deuxième section de cuve 102 et la troisième section de cuve 103.

L'ouverture inférieure 110A pratiquée en-dessous de la paroi de séparation 110, d'une hauteur approximative de l'ordre de 40 cm, assure un passage des eaux de la première section de cuve 101 vers la section de cuve 101A, à la base du couloir ascensionnel. Du fait de la circulation des eaux usées au travers de la cuve de traitement 100, les eaux usées subissent ainsi un mouvement ascensionnel dans la section de cuve 101A.

Une ouverture supérieure 110B, ménagée entre la paroi de séparation 110 est la paroi interne de la cuve de traitement 100 est avantageusement prévue afin de permettre le cas échéant le passage d'un trop-plein. A titre illustratif, cette ouverture supérieure 110B peut présenter une hauteur de l'ordre de 30 cm.

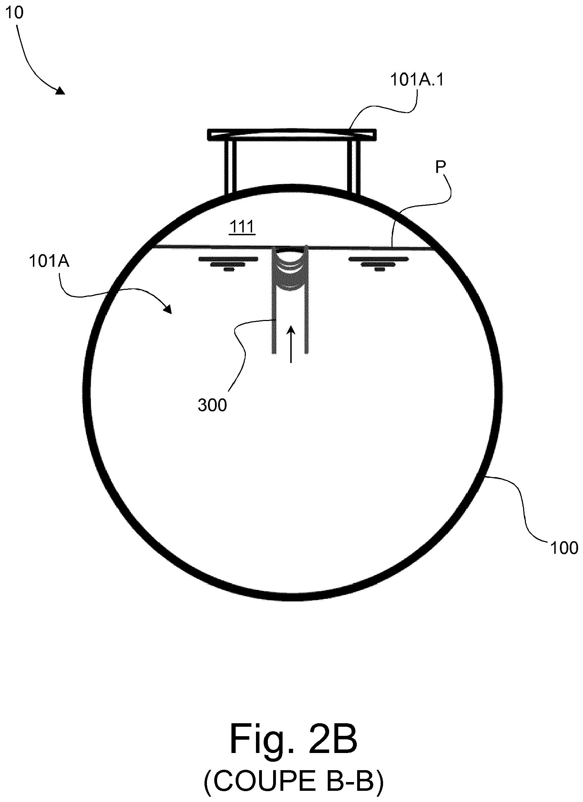

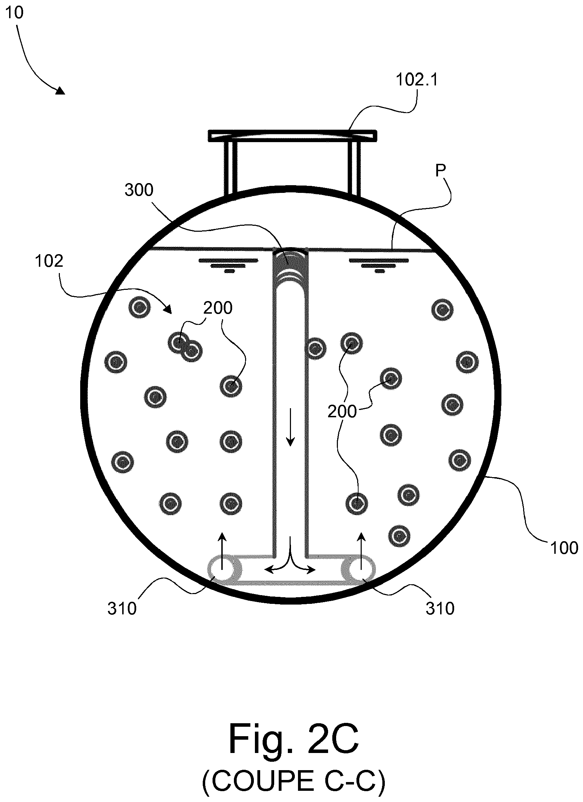

Un collecteur 300 est disposé en partie haute de la section de cuve 101A formant couloir ascensionnel, sous le plan d'eau P, afin de prélever les eaux usées, issues du traitement primaire. L'ouverture du collecteur 300 est orientée vers le bas et se situe, à titre illustratif, à une hauteur de l'ordre de 1.5 m par rapport au fond de la cuve de traitement 100. L'adoption du principe d'hydraulicité inversée permet d'assurer que le collecteur 300 prélève pour l'essentiel les parties liquides des eaux usées, le boues lourdes étant typiquement retenues en fond de cuve, alors que les matières flottantes en surface du plan d'eau P, telles que huiles et graisses, ne sont pas prélevées par le collecteur 300. A l'image des raccords d'entrée et de sortie 100A, 100B, le collecteur 300 peut comprendre un conduit en PVC de 200 mm de diamètre, ici configuré en « J » inversé, plongeant en sortie à la base de la deuxième section de cuve 102, comme illustré schématiquement dans la Figure 1B (voir également Figures 2B et 2C).

La partie terminale du collecteur 300 est raccordée à un distributeur 310 s'étendant en longueur à la base de la deuxième section de cuve 102. Dans l'exemple illustré, le distributeur 310 est configuré en U avec deux bras longitudinaux, perforés sur leur partie haute, pour permettre la distribution des eaux usées, issues du traitement primaire, à la base de la section de cuve 102. Plus précisément, chaque bras du distributeur 310 est ici pourvu de trois orifices de distribution 310A (voir Figures 1A et 1B). A titre d'exemple illustratif, chaque bras du distributeur 310 peut être constitué d'un conduit en PVC de 160 mm de diamètre pourvu sur sa partie supérieure d'orifices de distributions 310A de 100 mm de diamètre.

On comprendra que le collecteur 300 et le distributeur 310 forment ainsi un ensemble collecteur-distributeur permettent de prélever les eaux usées, issues du traitement primaire, en partie haute de la section de cuve 101A formant couloir ascensionnel et de délivrer lesdites eaux usées en partie basse de la deuxième section de cuve 102.

Selon l'invention, une souche bactérienne est introduite dans les eaux usées, par exemple directement dans la première section de cuve 101 ou dans les eaux usées, non-traitée, en amont de la cuve de traitement 100. L'introduction de cette souche bactérienne a notamment pour but de soumettre les boues lourdes et matière solides résiduelles à un processus de digestion anaérobie réduisant leur volume, ainsi que de favoriser le traitement biologique des matières organiques contenues dans les eaux usées dans la deuxième section de cuve 102, assisté par la présence des médias filtrants 200. Les médias filtrants 200 sont introduits en quantité appropriée dans la deuxième section de cuve 102 afin d'agir comme supports pour les bactéries, favorisant le développement de la biomasse et une digestion anaérobie approfondie des résidus organiques contenus dans les eaux usées.

Selon cette première variante de réalisation de l'invention, l'on comprendra ainsi que le traitement biologique opéré dans la deuxième section de cuve 102 est un traitement biologique essentiellement anaérobie.

La souche bactérienne est une souche bactérienne favorisant la digestion anaérobie des boues lourdes, matières solides résiduelles et autres résidus organiques contenus dans les eaux usées, préférablement une souche bactérienne sélectionnée parmi les souches bactériennes utilisées pour le traitement anaérobie en réacteur UASB (Upflow Anaerobic Sludge Blanket). Des tests effectués par le Demandeur au moyen de la souche bactérienne MICROCAT®-UASB de la société Bioscience, Inc. (www.bioscienceinc.com) donnent en particulier des résultants très probants. Ces résultats sont d'autant plus probants que l'utilisation des médias filtrants 200 dans la deuxième section de cuve 102 permet de fixer efficacement les résidus organiques et favoriser leur traitement par les bactéries.

La combinaison de la souche bactérienne et des médias filtrants 200 assure un traitement biologique optimal des eaux usées. Comme déjà évoqué plus haut, les eaux usées ainsi traitées biologiquement sont prélevées dans la deuxième section de cuve 102 afin d'être acheminées vers la troisième section de cuve 103 où une clarification est encore opérée.

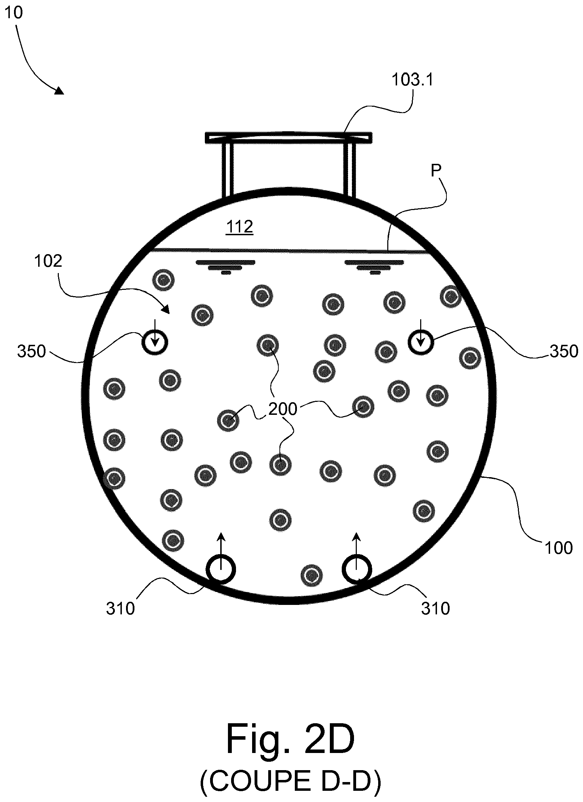

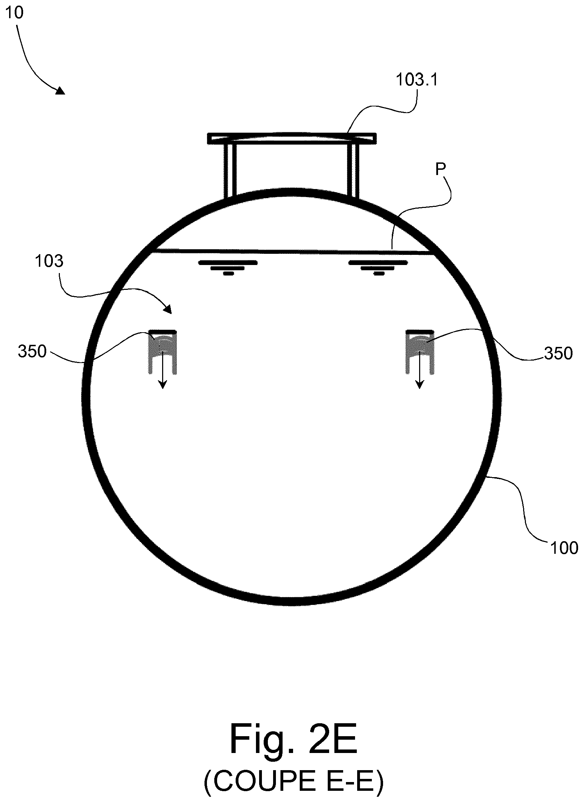

Préférablement, les eaux usées, traitées biologiquement, passent de la deuxième section de cuve 102 à la troisième section de cuve 103 par prélèvement au moyen d'un collecteur 350 disposé en-dessous du plan d'eau P de la deuxième section de cuve 102 (voir Figures 1A, 1B et 2D), lequel collecteur 350 est pourvu d'orifices d'admission présentant un diamètre plus faible que les dimensions des médias filtrants 200, assurant dès lors que les médias filtrants 200 restent confinés dans la deuxième section de cuve 102. A titre illustratif, le collecteur 350 est situé environ 50 cm sous la surface du plan d'eau P. La disposition du collecteur 350 en-dessous du plan d'eau P évite le colmatage des orifices d'admission du collecteur 350 par des particules ou résidus flottants. Le collecteur 350 peut être constitué d'une paire de conduits en PVC de 110 mm de diamètre, dont la partie supérieure, plongeant dans la deuxième section de cuve 102, est perforée pour assurer le passage des eaux usées traitées vers la troisième section de cuve 103, comme illustré dans les Figures 1A, 1B et 2E.

La clarification des eaux usées dans la troisième section de cuve 103 est opérée essentiellement par décantation, de sorte que des eaux clarifiées soient évacuées via le raccord de sortie 100B.

Le système d'épuration 10 est avantageusement dimensionné de sorte que les eaux usées séjournent pour une durée minimale de l'ordre de l'ordre de 48 à 72 heures dans la cuve de traitement 100, étant entendu que la cuve de traitement 100 est alimentée en continu.

A titre d'exemple illustratif, la cuve de traitement 100 telle qu'illustrée dans les Figures 1A-B à 2A-E présente un diamètre de l'ordre de 2.5 m et une longueur totale de l'ordre de 11.5 m, la longueur L1, L2, L3, respectivement L4 des sections de cuve 101, 101A, 102 et 103 étant d'approximativement 3.45 m, 1.75 m, 4.3 m et 2 m, respectivement. On notera encore la présence de trous d'homme 101.1, 101A.1, 102.1 et 103.1 sur la partie supérieure de la cuve de traitement 100 permettant l'accès à chaque section de cuve 101, 101A, 102, 103 pour inspection et entretien. Des évents sont encore prévus pour assurer une ventilation adéquate de la cuve et l'évacuation des gaz résultant de la décomposition biologique des matières organiques.

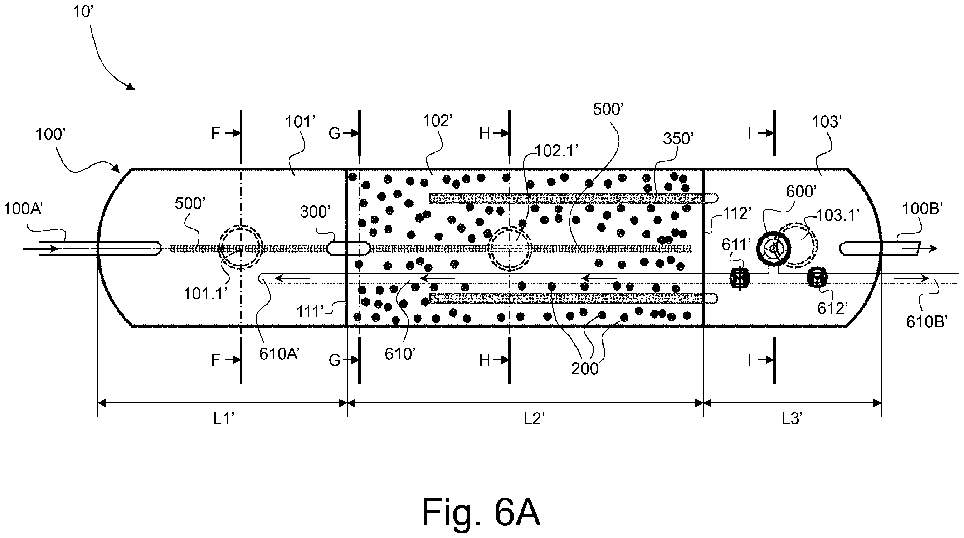

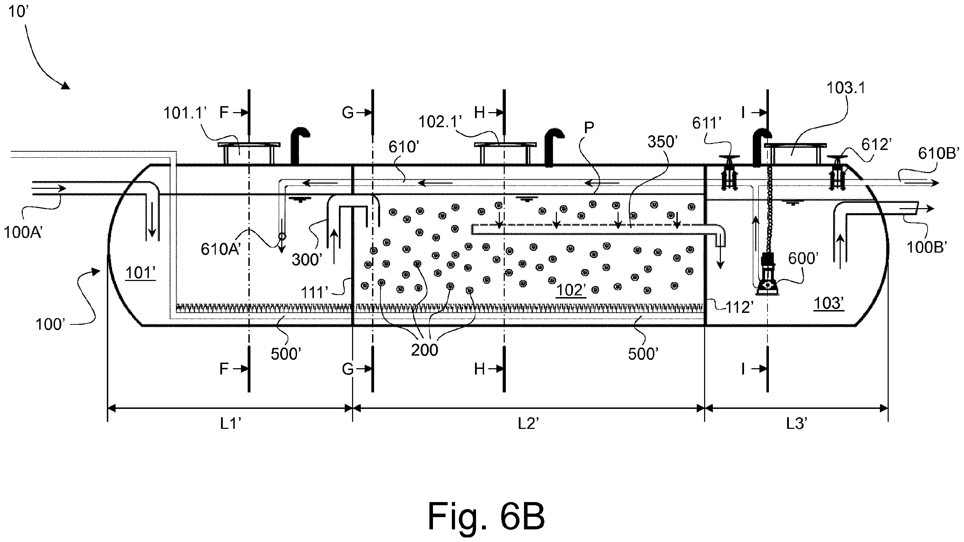

Les Figures 6A et 6B montrent respectivement une vue en plan et une vue en coupe latérale, schématiques, d'un système d'épuration, désigné globalement par la référence numérique 10', selon une seconde variante de réalisation de l'invention. À l'image du système d'épuration 10 précédemment décrit, ce système d'épuration 10', ou microstation, comporte notamment une cuve de traitement compartimentée 100' pour le traitement des eaux usées domestiques.

La cuve de traitement 100' est de même subdivisée en plusieurs sections de cuve successives. Selon l'invention, on distingue à nouveau trois sections de cuve principales 101' à 103', à savoir :
- une première section de cuve 101' (ou « fosse toutes eaux ») qui est alimentée en eaux usées, non-traitées, et dans laquelle un traitement primaire des eaux usées est opéré (cette première section de cuve 101' représente approximativement 30% de la capacité totale de la cuve de traitement 100') ;
- une deuxième section de cuve 102' (ou « réacteur biologique ») qui est alimentée en eaux usées, issues du traitement primaire, provenant de la première section de cuve 101', deuxième section de cuve 102' dans laquelle un traitement biologique des eaux usées est de même opéré avec l'assistance de médias filtrants 200 (cette deuxième section de cuve 102' représente ici 50% de la capacité totale de la cuve de traitement 100') ; et
- une troisième section de cuve 103' (ou « clarificateur ») qui est alimentée en eaux usées, traitées biologiquement, prélevées dans la deuxième section de cuve 102', et dans laquelle une clarification des eaux usées est opérée (cette troisième section de cuve 103' représente ici 20% de la capacité totale de la cuve de traitement 100').

À l'image de la cuve de traitement 100, la cuve de traitement 100' est avantageusement de forme essentiellement cylindrique et compartimentée pour former lesdites sections de cuve successives 101'-103', la cuve de traitement 100' étant placée en position horizontale de sorte que le traitement des eaux usées se déroule essentiellement horizontalement d'un bout à l'autre de la cuve de traitement 100'. Dans l'exemple illustré, la cuve de traitement 100' présente à nouveau un diamètre de l'ordre de 2.5 m. L'alimentation de la cuve de traitement 100', en l'occurrence de la première section de cuve 101', est assurée par un raccord d'entrée 100A' qui est typiquement raccordé au collecteur de rejets des eaux usées domestiques, non représenté. Les eaux usées, traitées biologiquement et clarifiées, sont extraites de la cuve de traitement 100', en l'occurrence de la troisième section de cuve 103', via un raccord de sortie 100B'. Ce raccord de sortie 100B' peut de même être raccordé à un système d'épandage, non représenté, ou à un système de traitement additionnel avant rejet. Les raccords d'entrée et de sortie 100A' et 100B' peuvent en particulier être des conduits en PVC d'un diamètre de 200 mm, dimensions qui sont à nouveau indiquées à titre purement illustratif et ne sont nullement limitatives.

On comprendra donc, de même, que les eaux usées transitent dans la cuve de traitement 100' où un traitement biologique est opéré, de la gauche vers la droite dans les illustrations des Figures 6A et 6B, la cuve de traitement 100' étant alimentée en continu.

Selon un mode de réalisation préféré et particulièrement avantageux, la cuve de traitement 100' est également réalisée en polyester renforcé de fibres de verre (PRFV). La cuve de traitement est pareillement configurée pour être enterrée et satisfaire les normes applicables, en particulier la norme SN EN 976 déjà mentionnée.

Le traitement primaire opéré dans la première section de cuve 101' consiste notamment en un commencement d'un processus de digestion aérobie des boues lourdes, matières solides résiduelles et résidus organiques contenus dans les eaux usées. Ce traitement primaire vise également à assurer que les boues lourdes et matières solides résiduelles contenues dans les eaux usées ne transitent pas directement vers les sections de cuves subséquentes, mais essentiellement les portions liquides en vue d'un traitement biologique approfondi dans la deuxième section de cuve 102'. Contrairement à la première variante de réalisation précédemment discutée, le processus de digestion est ici induit par oxygénation, par adjonction de bulles d'air dans la première section de cuve 101'. Ces bulles d'air sont produites au moyen d'un système générateur de bulles d'air 500' disposé dans la première section de cuve 101'. Ce système générateur de bulles d'air 500' est relié à un local technique (non représenté) disposant d'une alimentation en air adéquate, par exemple une alimentation en air comprimé.

L'alimentation de la deuxième section de cuve 102' est toujours opérée par induction d'un mouvement ascensionnel des eaux usées dans une portion terminale de la première section de cuve 101'. Toutefois, selon cette seconde variante de réalisation de l'invention, le mouvement ascensionnel des eaux usées est ici induit par l'adjonction des bulles d'air dans la première section de cuve 101' au moyen du système 500'.

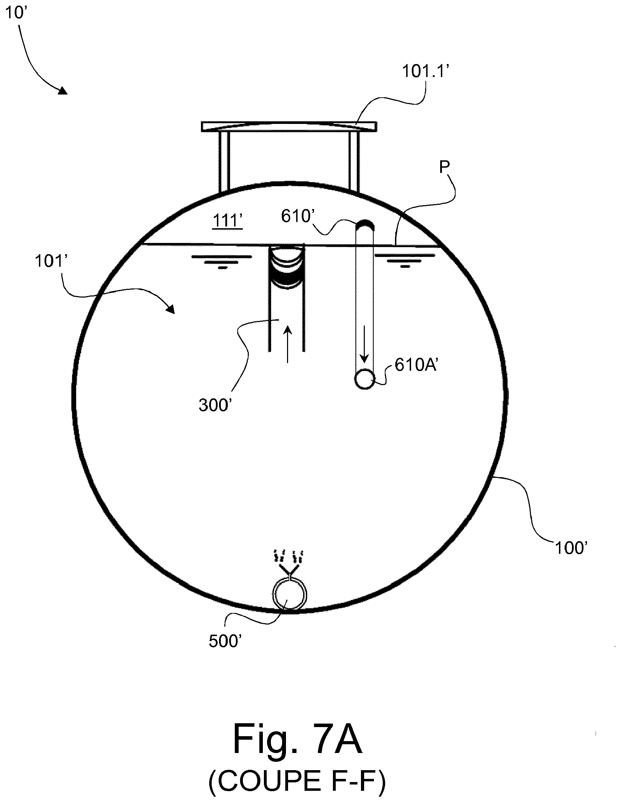

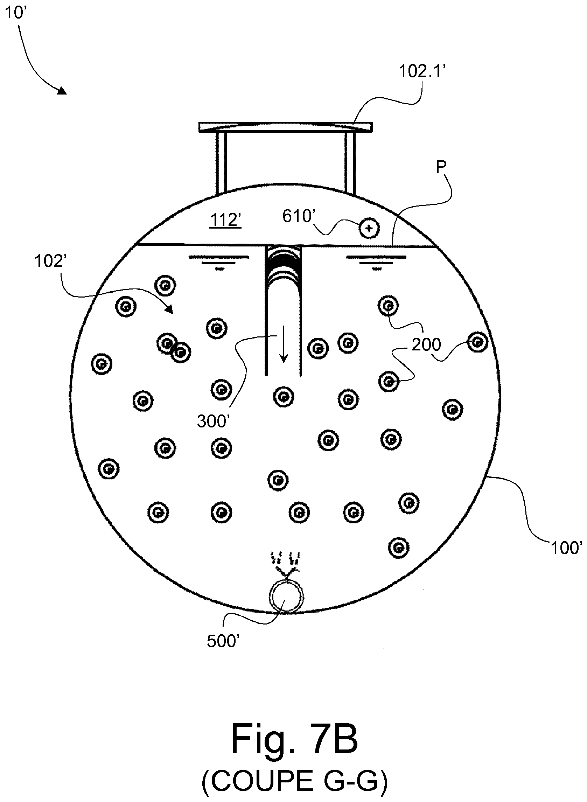

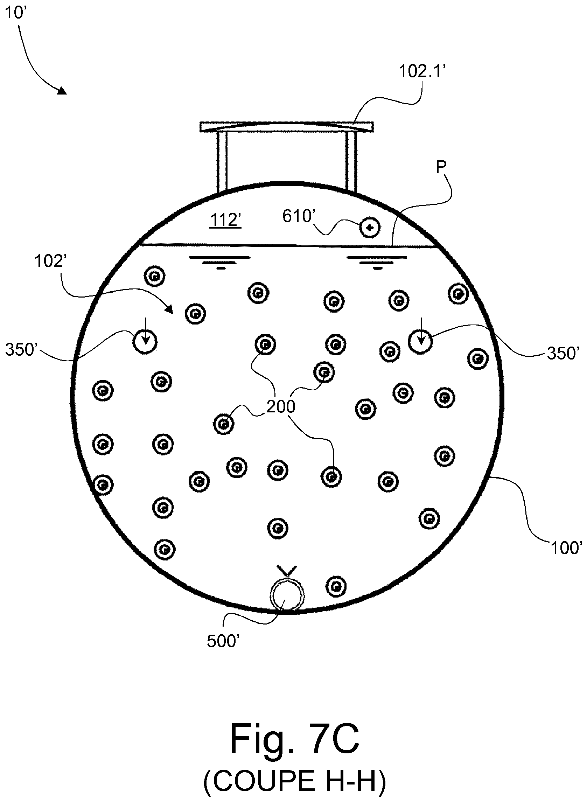

Un collecteur-distributeur 300' est disposé en partie haute de la portion terminale de la première section de cuve 101', sous le plan d'eau P, afin de prélever les eaux usées, issues du traitement primaire. L'ouverture du collecteur 300' est de même orientée vers le bas et se situe, à titre illustratif, à une hauteur de l'ordre de 1.5 m par rapport au fond de la cuve de traitement 100'. L'adoption du principe d'alimentation induit par mouvement ascensionnel des eaux usées permet d'assurer que le collecteur 300' prélève pour l'essentiel les parties liquides des eaux usées, le boues lourdes étant typiquement retenues en fond de cuve, alors que les matières flottantes en surface du plan d'eau P, telles que huiles et graisses, ne sont pas prélevées par le collecteur 300'. A l'image des raccords d'entrée et de sortie 100A', 100B', le collecteur 300' peut comprendre un conduit en PVC de 200 mm de diamètre, configuré en « J » inversé, plongeant en sortie dans la deuxième section de cuve 102', comme illustré schématiquement dans la Figure 6B (voir également Figures 7A et 7B).

La partie terminale du collecteur 300', qui plonge dans la deuxième section de cuve 102', joue ici le rôle de distributeur. Contrairement à la première variante de réalisation précédemment décrite, il n'est pas nécessaire que les eaux usées, issues du traitement primaire, soient distribuées à la base de la deuxième section de cuve 102'. Dans l'exemple illustré, le système générateur de bulles d'air 500' se prolonge avantageusement dans la deuxième section de cuve 102' pour opérer une oxygénation des eaux usées contenues dans la deuxième section de cuve 102', induisant naturellement un brassage des eaux usées. Le traitement biologique est une fois de plus assisté par la présence des médias filtrants 200, lesquels sont introduits en quantité appropriée dans la deuxième section de cuve 102' afin d'agir comme supports pour les bactéries, favorisant le développement de la biomasse et une digestion aérobie approfondie des résidus organiques contenus dans les eaux usées.

Selon cette seconde variante de réalisation de l'invention, l'on comprendra ainsi que le traitement biologique opéré dans la deuxième section de cuve 102' est un traitement biologique essentiellement aérobie.

La combinaison de l'oxygénation des eaux usées et des médias filtrants 200 assure un traitement biologique optimal des eaux usées. Comme déjà évoqué plus haut, les eaux usées ainsi traitées biologiquement sont prélevées dans la deuxième section de cuve 102' afin d'être acheminées vers la troisième section de cuve 103' où une clarification est encore opérée.

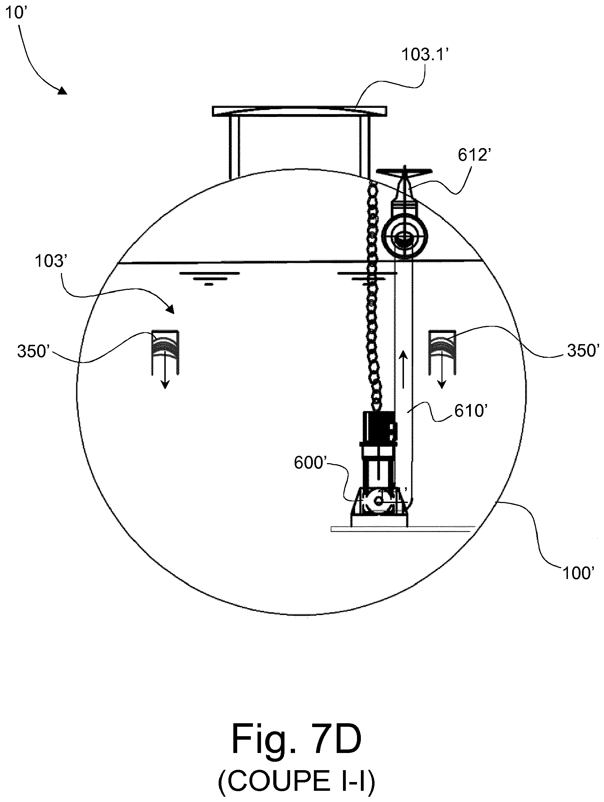

À l'image de la première variante de réalisation décrite plus haut, les eaux usées, traitées biologiquement, passent de la deuxième section de cuve 102' à la troisième section de cuve 103' par prélèvement au moyen d'un collecteur 350' disposé en-dessous du plan d'eau P de la deuxième section de cuve 102' (voir Figures 6A, 6B et 7D), lequel collecteur 350' est pourvu d'orifices d'admission présentant un diamètre plus faible que les dimensions des médias filtrants 200, assurant dès lors que les médias filtrants 200 restent confinés dans la deuxième section de cuve 102'. A titre illustratif, le collecteur 350' est situé environ 50 cm sous la surface du plan d'eau P. La disposition du collecteur 350' en-dessous du plan d'eau P évite une fois de plus le colmatage des orifices d'admission du collecteur 350' par des particules ou résidus flottants. Le collecteur 350' peut de même être constitué d'une paire de conduits en PVC de 110 mm de diamètre, dont la partie supérieure, plongeant dans la deuxième section de cuve 102', est perforée pour assurer le passage des eaux usées traitées vers la troisième section de cuve 103', comme illustré dans les Figures 6A, 6B et 7D.

La clarification des eaux usées dans la troisième section de cuve 103' est opérée essentiellement par décantation, de sorte que des eaux clarifiées soient évacuées via le raccord de sortie 100B'.

Le système d'épuration 10' est avantageusement dimensionné de sorte que les eaux usées séjournent pour une durée minimale de l'ordre de 36 à 48 heures dans la cuve de traitement 100', étant une fois de plus entendu que la cuve de traitement 100' est alimentée en continu.

A titre d'exemple illustratif, la cuve de traitement 100' telle qu'illustrée dans les Figures 6A-B à 7A-D présente un diamètre de l'ordre de 2.5 m et une longueur totale de l'ordre de 11.5 m, la longueur L1', L2', respectivement L3' des sections de cuve 101', 102' et 103' étant d'approximativement 3.45 m, 5.75 m et 2.3 m, respectivement. On notera encore la présence de trous d'homme 101.1', 102.1' et 103.1' sur la partie supérieure de la cuve de traitement 100' permettant l'accès à chaque section de cuve 101', 102', 103' pour inspection et entretien. Des évents sont encore être prévus pour assurer une ventilation adéquate de la cuve et l'évacuation des gaz résultant de la décomposition biologique des matières organiques.

En complément des éléments susmentionnés, le système d'épuration 10' peut encore être équipé d'un système de recirculation et d'extraction des boues. Une tel système est illustré schématiquement dans les Figures 6A-B et 7A-D, lequel comporte une pompe à boues 600' disposée dans la troisième section de cuve 103', laquelle pompe à boues 600' peut être sélectivement activée pour pomper les boues éventuellement présentes au fond de la troisième section de cuve 103' et alimenter une conduite 610' en vue de recirculer les boues vers la première section de cuve 101' via la sortie 610A' ou d'extraire les boues de la cuve de traitement 100' via la sortie 610B'. Une vanne de recirculation 611' est prévue à cet effet sur la portion de la conduite 610 reliant la pompe à boues 600' à la sortie 610A' débouchant dans la première section de cuve 101'. De même, une vanne d'extraction 612' est prévue à cet effet sur la portion de la conduite 610 reliant la pompe à boues 600' à la sortie 610B' débouchant à l'extérieur de la cuve de traitement 100'.

Le système générateur de bulles d'air 500' ainsi que la pompe à boue 600' nécessitent une alimentation en énergie. À titre préféré, des panneaux photovoltaïques peuvent être prévus afin d'assurer une alimentation en énergie autonome, indépendante d'un réseau électrique urbain.

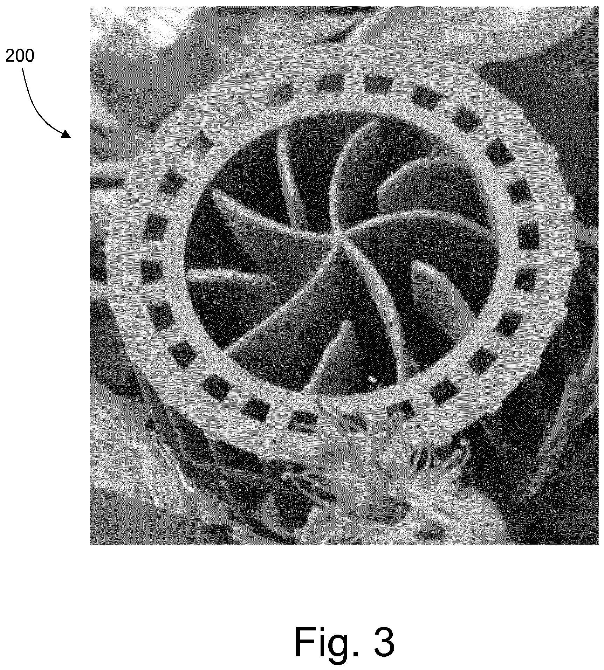

Divers types de médias filtrants 200 sont susceptibles d'être utilisés dans le cadre de l'invention. Il s'agit préférablement de médias filtrants 200 réalisés en matière plastique et sélectionnés pour présenter une surface spécifique égale ou supérieure à 200 m²/m³ (idéalement égale ou supérieure à 500 m²/m³) et un volume libre supérieur à 80% (idéalement égal ou supérieur à 90%). A titre d'exemple, les médias filtrants 200 peuvent avantageusement être des médias filtrants commercialisés par la société Bio-Fil, Biología y Filtración S.L. (http://www.bio-fil.es/) sous la désignation « Plastic media BIOFILL® type C-2® & C-2T® » et dont une illustration photographique est reportée à la Figure 3. Ces médias filtrants présentent avantageusement une surface spécifique supérieure à 590 m²/m³ et un volume libre de l'ordre de 90%, pour une densité avoisinant 1 g/cm³.

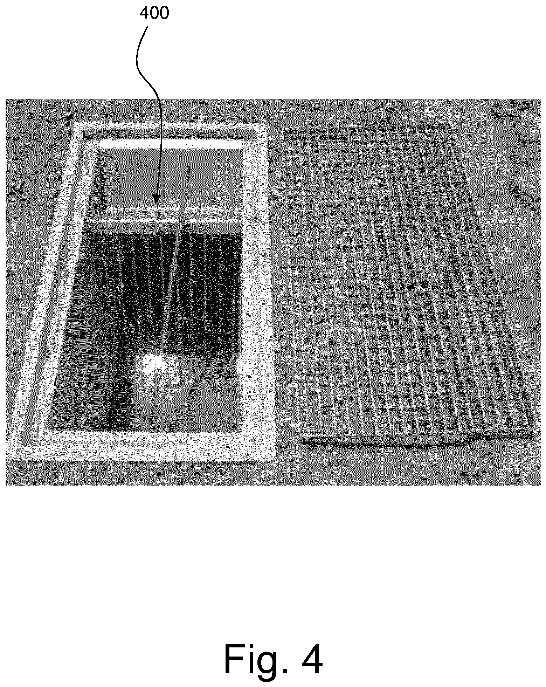

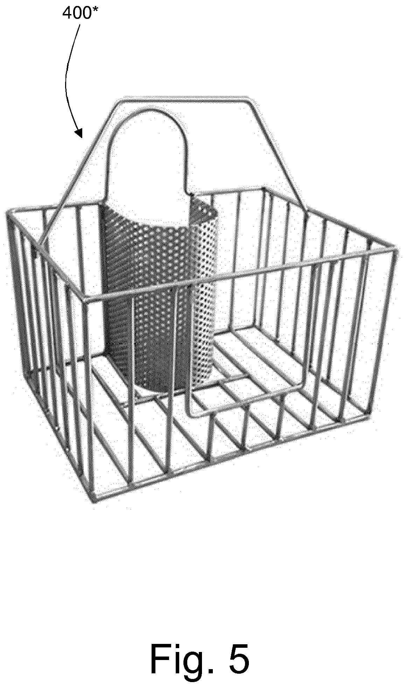

Les Figures 4 et 5 sont des illustrations photographiques d'un dégrilleur 400, respectivement 400*, placé sur le trajet des eaux usées non-traitées en amont de la cuve de traitement 100 évoquée ci-dessus. Ce dégrilleur permet de retenir les parties solides les plus volumineuses contenues dans les eaux de rejets, en amont de la cuve de traitement, parties solides qui pourraient autrement interférer avec le processus de traitement des eaux usées dans la cuve de traitement 100. L'usage d'un dégrilleur est notamment recommandable aux fins de retenir les matières solides très grossières, en particulier des matières inorganiques, afin d'éviter une obstruction des conduites du système de traitement. Le dégrilleur 400 illustré en Figure 4 est constitué d'un caillebotis latéral placé sur un collecteur de rejets auquel la cuve de traitement 1 est raccordée. A titre alternatif, le dégrilleur 400* peut être placé en cuve avec panier de grille en acier inoxydable comme illustré sur la Figure 5.

Les avantages du procédé et du système d'épuration selon l'invention sont multiples :
- le processus de dégradation des matières organiques est très stable ;
- à rendement égal, le volume requis du réacteur biologique intégrant les cultures libres est plus réduit ;
- le dimensionnement du réacteur biologique est flexible et adaptable aux exigences de rendement ; et
- la technologie s'adapte de manière optimale aux variations de charges polluantes.

L'invention favorise par ailleurs l'absence de résidus filamenteux et permet de faciliter le contrôle et l'entretien.

Le processus de traitement biologique opéré selon l'invention permet un abattement de la charge polluante de 70% et autorise, suivant les normes de l'OMS, le rejet de l'eau traitée par simple épandage.

On comprendra de manière générale que diverses modifications et/ou améliorations évidentes pour l'homme du métier peuvent être apportées aux modes de réalisation décrits dans la présente description sans sortir du cadre de l'invention défini par les revendications annexées.

### LISTE DES SIGNES DE RÉFÉRENCE UTILISÉS DANS LA PRÉSENTE DESCRIPTION ET DANS LES DESSINS

- 10: système d'épuration / microstation d'épuration (première variante de réalisation)
- 100: cuve de traitement compartimentée / cuve en en polyester renforcé de fibres de verre (PRFV)
- 100A: raccord d'entrée de la cuve de traitement 100 / raccordement au collecteur de rejets des eaux usées domestiques
- 100B: raccord de sortie de la cuve de traitement 100 / raccordement à un système d'épandage ou traitement additionnel avant rejet
- 101: première section de cuve (« fosse toutes eaux ») / initiation du processus de traitement biologique
- 101.1: trou d'homme pour accès à la première section de cuve 101
- 101A: section de cuve formant couloir ascensionnel formé en portion terminale de la première section de cuve 101
- 101A.1: trou d'homme pour accès à la section de cuve 101A formant couloir ascensionnel
- 102: deuxième section de cuve (« réacteur biologique ») / traitement biologique à l'aide de média filtrants 200
- 102.1: trou d'homme pour accès à la deuxième section de cuve 102
- 103: troisième section de cuve (« clarificateur ») / clarification
- 103.1: trou d'homme pour accès à la troisième section de cuve 103
- 110: paroi de séparation séparant la section de cuve 101A formant couloir ascensionnel du reste de la première section de cuve 101
- 110A: ouverture inférieure entre la paroi de séparation 110 et la paroi interne de la cuve de traitement 100 pour le passage des eaux
- 110B: ouverture supérieure entre la paroi de séparation 110 et la paroi interne de la cuve de traitement 100 pour le trop-plein
- 111: paroi de séparation entre la première section de cuve 101 (section de cuve 101A) et la deuxième section de cuve 102
- 112: paroi de séparation entre la deuxième section de cuve 102 et la troisième section de cuve 103
- 200: médias filtrants disposés dans la deuxième section de cuve 102
- 300: collecteur pour le prélèvement des eaux usées, issues du traitement primaire, provenant de la première section de cuve 101 / prélèvement en partie haute de la section de cuve 101A formant couloir ascensionnel, sous le plan d'eau P
- 310: distributeur pour délivrer les eaux usées en partie basse de la deuxième section de cuve 102
- 310A: orifices de distribution du distributeur 310
- 350: collecteur pour le prélèvement des eaux usées, traitées biologiquement, provenant de la deuxième section de cuve 102 / prélèvement en partie haute de la deuxième section de cuve 102, sous le plan d'eau P
- 10': système d'épuration / microstation d'épuration (seconde variante de réalisation)
- 100': cuve de traitement compartimentée / cuve en en polyester renforcé de fibres de verre (PRFV)
- 100A': raccord d'entrée de la cuve de traitement 100' / raccordement au collecteur de rejets des eaux usées domestiques
- 100B': raccord de sortie de la cuve de traitement 100' / raccordement à un système d'épandage ou traitement additionnel avant rejet
- 101': première section de cuve (« fosse toutes eaux ») / initiation du processus de traitement biologique
- 101.1': trou d'homme pour accès à la première section de cuve 101'
- 102': deuxième section de cuve (« réacteur biologique ») / traitement biologique à l'aide de média filtrants 200
- 102.1': trou d'homme pour accès à la deuxième section de cuve 102'
- 103': troisième section de cuve (« clarificateur ») / clarification
- 103.1': trou d'homme pour accès à la troisième section de cuve 103'
- 111': paroi de séparation entre la première section de cuve 101' et la deuxième section de cuve 102'
- 112': paroi de séparation entre la deuxième section de cuve 102' et la troisième section de cuve 103'
- 300': collecteur-distributeur pour le prélèvement des eaux usées, issues du traitement primaire, provenant de la première section de cuve 101' et la délivrance des eaux usées dans la deuxième section de cuve 102' / prélèvement en partie haute de la section de cuve 101', sous le plan d'eau P
- 350': collecteur pour le prélèvement des eaux usées, traitées biologiquement, provenant de la deuxième section de cuve 102' / prélèvement en partie haute de la deuxième section de cuve 102', sous le plan d'eau P
- 500': système générateur de bulles d'air disposé dans la première section de cuve 101' et se prolongeant dans la deuxième section de cuve 102'
- 600': pompe à boues
- 610': conduite de recyclage des boues
- 610A': sortie de la conduite de recyclage des boues 610' débouchant dans la première section de cuve 101'
- 610B': sortie de la conduite de recyclage des boues 610' pour l'extraction des boues
- 611': vanne de recirculation des boues
- 612': vanne d'extraction des boues
- P: plan d'eau
- L1: longueur de la première section de cuve 101 (par ex. 3.45 m)
- L2: longueur de la section de cuve 101A formant couloir ascensionnel (par ex. 1.75 m)
- L3: longueur de la deuxième section de cuve 102 (par ex. 4.3 m)
- L4: longueur de la troisième section de cuve 103 (par ex. 2 m)
- L1': longueur de la première section de cuve 101' (par ex. 3.45 m)
- L2': longueur de la deuxième section de cuve 102' (par ex. 5.75 m)
- L3': longueur de la troisième section de cuve 103' (par ex. 2.3 m)
- 400: dégrilleur placé sur le trajet des eaux usées non-traitées en amont de la cuve de traitement 100 / caillebotis latéral placé sur un collecteur de rejets auquel la cuve de traitement 100 est raccordée
- 400*: dégrilleur placé sur le trajet des eaux usées non-traitées en amont de la cuve de traitement 100 / dégrilleur disposé en cuve avec panier de grille en acier inoxydable

## Revendications

1. Un procédé d'épuration pour le traitement biologique d'eaux usées domestiques, comprenant les étapes suivantes :
- fourniture d'une cuve de traitement (100 ; 100') des eaux usées, laquelle cuve de traitement (100 ; 100') est subdivisées en plusieurs sections de cuve successives (101-103 ; 101'-103') ;
- alimentation d'une première section de cuve (101 ; 101') de ladite cuve de traitement (100 ; 100') en eaux usées, non-traitées, comprenant des boues lourdes, matières solides résiduelles et autres résidus organiques, première section de cuve (101 ; 101') dans laquelle un traitement primaire des eaux usées est opéré ;
- alimentation d'une deuxième section de cuve (102 ; 102') de ladite cuve de traitement (100 ; 100') au moyen des eaux usées, issues du traitement primaire, provenant de la première section de cuve (101 ; 101 '), deuxième section de cuve (102 ; 102') dans laquelle un traitement biologique des eaux usées est opéré et dans laquelle des médias filtrants (200) sont introduits, lesquels médias filtrants (200) agissent comme supports pour le traitement biologique des eaux usées dans ladite deuxième section de cuve (102 ; 102') ;
- prélèvement des eaux usées, traitées biologiquement, dans ladite deuxième section de cuve (102 ; 102') et acheminement desdites eaux usées vers une troisième section de cuve (103 ; 103') de ladite cuve de traitement (100 ; 100'), troisième section de cuve (103 ; 103') dans laquelle une clarification des eaux usées, traitées biologiquement, est opérée,
**caractérisé en ce que** l'alimentation de la deuxième section de cuve (102 ; 102') est opérée par induction d'un mouvement ascensionnel des eaux usées dans une portion terminale de la première section de cuve (101 ; 101').

2. Le procédé d'épuration selon la revendication 1, **caractérisé en ce que** le traitement biologique opéré dans la deuxième section de cuve (102) est un traitement biologique essentiellement anaérobie et **en ce que** le procédé d'épuration comporte en outre une étape d'introduction d'une souche bactérienne favorisant la digestion anaérobie des boues lourdes, matières solides résiduelles et autres résidus organiques contenus dans les eaux usées,
ladite souche bactérienne étant préférablement une souche bactérienne sélectionnée parmi les souches bactériennes utilisées pour le traitement anaérobie en réacteur UASB (Upflow Anaerobic Sludge Blanket).

3. Le procédé d'épuration selon la revendication 2, **caractérisé en ce que** le mouvement ascensionnel des eaux usées est induit par hydraulicité inversée dans une section de cuve (101A) formant couloir ascensionnel, en portion terminale de la première section de cuve (101).

4. Le procédé d'épuration selon la revendication 3, **caractérisé en ce que** la deuxième section de cuve (102) est alimentée au moyen d'un collecteur-distributeur (300, 310) prélevant les eaux usées, issues du traitement primaire, en partie haute de la section de cuve (101A) formant couloir ascensionnel et délivrant lesdites eaux usées en partie basse de ladite deuxième section de cuve (102).

5. Le procédé d'épuration selon la revendication 1, **caractérisé en ce que** le traitement biologique opéré dans la deuxième section de cuve (102') est un traitement biologique essentiellement aérobie et **en ce que** le procédé d'épuration comporte en outre une étape d'oxygénation des eaux usées contenues dans la deuxième section de cuve (102').

6. Le procédé d'épuration selon la revendication 5, **caractérisé en ce que** le mouvement ascensionnel des eaux usées est induit par adjonction de bulles d'air dans la première section de cuve (101 ').

7. Le procédé d'épuration selon l'une quelconque des revendications précédentes, **caractérisé en ce que** les eaux usées séjournent pour une durée minimale de 36 à 72 heures dans ladite cuve de traitement (100 ; 100').

8. Le procédé d'épuration selon l'une quelconque des revendications précédentes, **caractérisé en ce que** les eaux usées, traitées biologiquement, passent de la deuxième section de cuve (102 ; 102') à la troisième section de cuve (103 ; 103') par prélèvement au moyen d'un collecteur (350 ; 350') disposé en-dessous du plan d'eau (P) de la deuxième section de cuve (102 ; 102'), lequel collecteur (350 ; 350') est pourvu d'orifices d'admission présentant un diamètre plus faible que les dimensions des médias filtrants (200).

9. Le procédé d'épuration selon l'une quelconque des revendications précédentes, **caractérisé en ce que** les eaux usées, traitées biologiquement et clarifiées, sont ensuite rejetées par épandage.

10. Un système d'épuration (10) pour la mise en oeuvre du procédé d'épuration selon l'une quelconque des revendications 2 à 4, lequel système d'épuration (10) comporte notamment une cuve de traitement (100) subdivisées en plusieurs sections de cuve successives (101-103), comprenant :
- une première section de cuve (101) configurée pour permettre l'alimentation en eaux usées non-traitées comprenant lesdites boues lourdes, matières solides résiduelles et autres résidus organiques ;
- une deuxième section de cuve (102) configurée pour permettre l'alimentation en eaux usées provenant de la première section de cuve (101), laquelle deuxième section de cuve (102) est adaptée pour contenir des médias filtrants (200) ;
- un collecteur-distributeur (300, 310) prélevant les eaux usées provenant de la première section de cuve (101) et délivrant lesdites eaux usées dans la deuxième section de cuve (102) ;
- un collecteur (350) configuré pour prélever les eaux traitées dans ladite deuxième section de cuve (102) ; et
- une troisième section de cuve (103) configurée pour permettre la clarification des eaux traitées prélevées par le collecteur (350),
**caractérisé en ce que** la cuve de traitement (100) comprend en outre une section de cuve (101A) formant couloir ascensionnel, disposée en portion terminale de la première section de cuve (101), et dans laquelle le mouvement ascensionnel des eaux usées est induit,
et **en ce que** le collecteur-distributeur (300, 310) est préférablement configuré pour prélever les eaux usées en partie haute de la section de cuve (101A) formant couloir ascensionnel et délivrer lesdites eaux usées en partie basse de ladite deuxième section de cuve (102).

11. Un système d'épuration (10') pour la mise en oeuvre du procédé d'épuration selon la revendication 5 ou 6, lequel système d'épuration (10') comporte notamment une cuve de traitement (100') subdivisées en plusieurs sections de cuve successives (101'-103'), comprenant :
- une première section de cuve (101') configurée pour permettre l'alimentation en eaux usées non-traitées comprenant lesdites boues lourdes, matières solides résiduelles et autres résidus organiques ;
- une deuxième section de cuve (102') configurée pour permettre l'alimentation en eaux usées provenant de la première section de cuve (101'), laquelle deuxième section de cuve (102') est adaptée pour contenir des médias filtrants (200) ;
- un collecteur-distributeur (300') prélevant les eaux usées provenant de la première section de cuve (101') et délivrant lesdites eaux usées dans la deuxième section de cuve (102') ;
- un collecteur (350') configuré pour prélever les eaux traitées dans ladite deuxième section de cuve (102') ; et
- une troisième section de cuve (103') configurée pour permettre la clarification des eaux traitées prélevées par le collecteur (350'),
**caractérisé en ce que** le système d'épuration (100') comprend en outre un système générateur de bulles d'air (500') disposé dans la première section de cuve (101 ') afin de démarrer le traitement primaire des eaux usées par digestion aérobie et induire le mouvement ascensionnel des eaux usées.

12. Le système d'épuration (10') selon la revendication 11, **caractérisé en ce que** le système générateur de bulles d'air (500') se prolonge dans la deuxième section de cuve (102') afin d'opérer l'oxygénation des eaux usées contenues dans la deuxième section de cuve (102').

13. Le système d'épuration (10 ; 10') selon l'une quelconque des revendications 10 à 12, **caractérisé en ce que** la cuve de traitement (100 ; 100') est de forme essentiellement cylindrique et compartimentée pour former lesdites sections de cuve successives (101-103 ; 101'-103'), la cuve de traitement (100 ; 100') étant configurée pour être placée, notamment enterrée, en position horizontale de sorte que le traitement des eaux usées se déroule essentiellement horizontalement d'un bout à l'autre de la cuve de traitement (100 ; 100').

14. Le système d'épuration (10 ; 10') selon l'une quelconque des revendications 10 à 13, **caractérisé en ce que** la cuve de traitement (100 ; 100') est réalisée en polyester renforcé de fibres de verre (PRFV).

15. Le système d'épuration (10 ; 10') selon l'une quelconque des revendications 10 à 14, **caractérisé en ce que** la deuxième section de cuve (102 ; 102') occupe un volume représentant de l'ordre de 40 à 50% de la capacité totale de la cuve de traitement (100 ; 100').
